# EUROPEAN PATENT APPLICATION

(11) **EP 4 456 250 A1**
(43) Date of publication of application: **30.10.2024**
(21) Application number: 24171557.2
(22) Date of filing: 22.04.2024
(51) Int. Cl.: H01M 10/42, H01M 10/0567, H01M 10/0525, A62D 1/00, B01J 13/14

(54) **ADDITIVE FOR ELECTROLYTE SOLUTION OF SECONDARY BATTERY, METHOD OF PREPARING THE SAME, ELECTROLYTE SOLUTION INCLUDING THE SAME AND LITHIUM SECONDARY BATTERY INCLUDING THE SAME**

(30) Priority: 27.04.2023 KR 20230055562
(71) Applicant: SK Innovation Co., Ltd., Seoul 03188 (KR); SK On Co., Ltd., Seoul 03161 (KR)
(72) Inventor: SEON, Min Kyung, 34124 Daejeon (KR); LEE, Hong Won, 34124 Daejeon (KR); KIM, Jeong Yun, 34124 Daejeon (KR); SHIM, Yu Na, 34124 Daejeon (KR)
(74) Representative: Prüfer & Partner mbB Patentanwälte · Rechtsanwälte

(57) **Abstract**

Disclosed is an additive for an electrolyte solution of a secondary battery comprising a microcapsule particle. The microcapsule particle comprises a core containing a phosphorus-based flame retardant, and a shell surrounding a surface of the core and including a polymer that includes a urea-derived repeating unit, a formaldehyde-derived repeating unit and a resorcinol-derived repeating unit. Further disclosed is a method of preparing an additive for an electrolyte solution of a secondary battery, the electrolyte solution for a secondary battery, as well as a lithium secondary battery comprising the additive or the electrolyte solution in accordance with the presentdisclosure, The present invention further refers to the use of the additive for an electrolyte solution of a secondary battery. An electrolyte solution and a lithium secondary battery including the additive for an electrolyte solution have improved stability, life-span and storage properties at high temperature.

## Description

### TECHNICAL FIELD

The present disclosure relates to an additive for an electrolyte of a secondary battery, a method of preparing the same, an electrolyte solution including the same and a lithium secondary battery including the same. The present disclosure further relates to a lithium secondary battery comprising the additive, and to the use of the additive for an electrolyte solution of a secondary battery.

### BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an electric automobile, a hybrid vehicle, etc.

Examples of the secondary battery includes, e.g., a lithium secondary battery, a nickel-cadmium battery, a nickel-hydrogen battery, etc. The lithium secondary battery is actively developed and applied due to high operational voltage and energy density per unit weight, a high charging rate, a compact dimension, etc.

For example, the lithium secondary battery may include an electrode assembly including a cathode, an anode and a separation layer (separator), and an electrolyte solution immersing the electrode assembly. The lithium secondary battery may further include an outer case having, e.g., a pouch shape accommodating the electrode assembly and the electrolyte.

As an application range of the lithium secondary battery is expanded, for example greater life-span, higher capacity and operation stability are required. Accordingly, a lithium secondary battery capable of e.g., providing uniform power and capacity even during repeated charging and discharging is advantageous.

However, power and capacity may be decreased due to, e.g., surface damages of a nickel-based lithium metal oxide used as a cathode active material during repeated charging and discharging, and a side reaction between the nickel-based lithium metal oxide and the electrolyte solution may occur. Further, stability of the battery may be deteriorated in harsh environment of high temperature or low temperature.

### SUMMARY

According to an aspect of the present invention, there is provided an additive for an electrolyte solution of a secondary battery, preferably a lithium secondary battery, which additive provides improved properties e.g., at high temperature, and a method of preparing the same.

According to another aspect of the present invention, there is provided an electrolyte solution of a lithium secondary battery which electrolyte solution provides improved properties e.g., at high temperature. According to a further aspect, the present invention provides a secondary battery, preferably a lithium secondary battery, comprising the additive of the present invention or the electrolyte solution of the present invention. According to another aspect, the invention refers to the use of an additive of the present invention for an electrolyte solution of a secondary battery.

An additive for an electrolyte solution of a secondary battery includes a microcapsule particle, preferably said additive includes at least 90 wt% of said microcapsule particle, preferably the additive consists of said microcapsule particles. The microcapsule particle includes a core containing a phosphorus-based flame retardant, and a shell surrounding a surface of the core and including a polymer that includes a urea-derived repeating unit, a formaldehyde-derived repeating unit and a resorcinol-derived repeating unit. Preferably, the shell includes at least 90 wt% of said polymer, preferably the shell consists of said polymer.

In the context of the present invention, a polymer or copolymer that includes a urea-derived repeating unit, a formaldehyde-derived repeating unit and a resorcinol-derived repeating unit is a polymer or copolymer prepared by polymerizing urea, formaldehyde, and resorcinol.

In some embodiments, the shell may include a urea-formaldehyde-resorcinol terpolymer.

In some embodiments, the phosphorus-based flame retardant may include a phosphate-based flame retardant or a phosphazene-based flame retardant. Preferably, the phosphorus-based flame retardant consists of a phosphate-based flame retardant and/or a phosphazene-based flame retardant.

In some embodiments, the phosphazene-based flame retardant may include, preferably consist of, a compound or more than one compound represented by Chemical Formula 1.

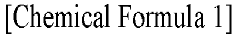

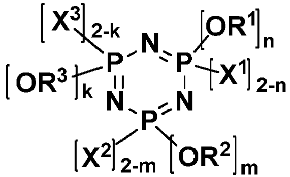

In Chemical Formula 1, X¹ to X³ are each independently Cl, Br or F, and, R¹ to R³ are each independently a C1 to C6 alkyl group or a C6 to C20 aryl group, and n, m and k are each independently 0, 1 or 2.

In some embodiments, the phosphate-based flame retardant may include, or consist of, triphenyl phosphate, trixylenyl phosphate, tricresyl phosphate, triisopropylphenyl phosphate, trischloroethyl phosphate, trischloropropyl phosphate, resorcinyl diphenyl phosphate, phenyl diresorcinyl phosphate, cresyl diphenyl phosphate, xylenyl diphenyl phosphate and/or phenyl di(isopropylphenyl)phosphate.

In some embodiments, a content of the formaldehyde-derived repeating unit in the polymer may be in a range from 20 mols to 100 moles per 1 mole of the resorcinol-derived repeating unit, and a content of the urea-derived repeating unit in the polymer may be in a range from 10 moles to 40 moles per 1 mole of the resorcinol-derived repeating unit. In one embodiment, the polymer does not include further repeating units.

In some embodiments, a particle diameter of the microcapsule particle may be in a range from 1 µm to 15 µm, preferably the particle diameter of the microcapsule particle is in a range from 3 µm to 13 µm, more preferably in a range from 5 µm to 12 µm.

In some embodiments, the shell may have a thickness in a range from 100 nm to 300 nm.

The thickness of the shell can be measured by any suitable method that is known to a skilled person. Preferably, in the present invention the thickness is measured from a cross-section SEM image of the particles. The cross-section SEM image may be obtained by using Apreo of Thermofisher^{™} and under about 5 kV of accelerating voltage and 12 mm or less of working distance.

In some embodiments, the particle diameter of the microcapsule particle is in a range from 1 µm to 15 µm, and the shell has a thickness in a range from 100 nm to 300 nm.

In some embodiments, the content of the core may be in a range from 50 wt% to 80 wt% based on a total weight of the microcapsule particle.

In some embodiments, the polymer may include a structure in which linear chains including a plurality of the urea-derived repeating units and the resorcinol-derived repeating units are cross-linked by the formaldehyde-derived repeating unit.

In a method of preparing an additive for an electrolyte solution of a secondary battery, a phosphorus-based flame retardant is added to a mixture containing urea and resorcinol to prepare a dispersion. Formaldehyde is added to the dispersion to form microcapsule particles.

In some embodiments, a pH of the mixture may be in a range from 3 to 5.

In some embodiments, in the preparation of the dispersion, preliminary particles that may include a core containing the phosphorus-based flame retardant and a preliminary shell containing a urea-resorcinol product formed on the core are formed.

In some embodiments, in the formation of the microcapsule particles, the preliminary shell may be converted into a shell by additionally cross-linking the preliminary shell by formaldehyde.

In some embodiments, the formation of the microcapsule particles may be performed at a temperature in a range from 50 °C to 80 °C.

An electrolyte solution for a secondary battery includes an organic solvent, a lithium salt and the additive for an electrolyte solution of a secondary battery according to the above-described embodiments.

In some embodiments, a content of the additive for an electrolyte solution of a secondary battery may be in a range from 1 wt% to 5 wt% based on a total weight of the electrolyte solution. In one embodiment, the additive may consist of the microcapsule particles.

An electrolyte additive for a secondary battery according to example embodiments of the present disclosure includes a microcapsule particle that includes a core containing a flame retardant and a shell containing a polymer. The electrolyte solution for a lithium secondary battery including the additive may have a flame retardancy, and may physically separate the flame retardant and the electrolyte solution by the polymer shell to prevent deterioration of a battery performance.

The electrolyte additive for a secondary battery according to example embodiments of the present disclosure includes the microcapsule particle including a urea-resorcinol-formaldehyde polymer. The urea-resorcinol-formaldehyde polymer of the shell may be stably maintained in a state surrounding the flame retardant core in a driving environment of the battery.

Additionally, the urea-resorcinol-formaldehyde polymer of the shell may be destroyed at a critical temperature to release the flame retardant of the core to prevent a thermal runaway of the battery.

A secondary battery, for example a lithium secondary battery, according to embodiments of the present disclosure includes the electrolyte additive for a secondary battery, thereby achieving life-span properties and storage stability at high temperature without substantially degrading an initial performance of the battery.

### BRIEF DESCRIPTION OF THE DRAWINGS

FIGS. 1 and 2 are a schematic plan view and a schematic cross-sectional view, respectively, illustrating a secondary battery in accordance with example embodiments.
FIG. 3 is an SEM image of a microcapsule prepared in Example 1.
FIGS. 4 and 5 are EDS element mapping images of a cross-section of a microcapsule in Example 1.

### DETAILED DESCRIPTION OF THE EMBODIMENTS

According to example embodiments of the present disclosure, an electrolyte additive for a secondary battery including a microcapsule particle that includes a core and a shell. Additionally, an electrolyte solution for a lithium secondary battery and a lithium secondary battery including the additive and having improved high temperature properties are also provided.

The term "Ca to Cb" used herein refers that the number of carbon atoms in a functional group is in a range from a to b.

The electrolyte additive for a secondary battery (hereinafter, abbreviated as an additive) according to example examples may include a microcapsule particle. The additive may include a plurality of the microcapsule particles. For example, an amount of the microcapsule particles may be 50 weight percent (wt%) or more based on a total weight of the additive. In some embodiments, the amount of the microcapsule particles may be 60 wt% or more, 70 wt% or more, 80 wt% or more, or 90 wt% or more based on the total weight of the additive.

In an embodiment, the additive may substantially consist of the microcapsule particles.

The microcapsule particle may have a core and a shell surrounding a surface of the core. The shell may surround an entire outer surface of the core.

The core may include a phosphorus-based flame retardant. The phosphorus-based flame retardant may stabilize free radicals generated during charging and discharging of the battery. Accordingly, combustion and explosion at an inside of the battery due to a reaction of the free radicals may be prevented.

In example embodiments, the phosphorus-based flame retardant may include a phosphate-based flame retardant or a phosphazene-based flame retardant. In some embodiments, the phosphorus-based flame retardant may include both the phosphate-based flame retardant and the phosphazene-based flame retardant.

In example embodiments, the phosphazene-based flame retardant may include a compound represented by Chemical Formula 1.

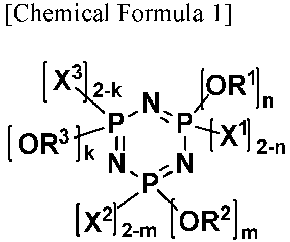

In Chemical Formula 1, X¹ to X³ may each independently be a halogen atom, e.g., Cl, Br or F, and may be the same or different from each other.

In Chemical Formula 1, R¹ to R³ may each independently be a C1 to C6 alkyl group or a C6 to C20 aryl group. In some embodiments, R¹ to R³ may be the same as or different from each other.

The alkyl group and the aryl group may be unsubstituted or substituted. The term "substituted" may refer that any hydrogen bonded to a carbon atom of a hydrocarbon group is substituted with at least one substituent. Examples of the substituent include a halogen atom, a C1 to C6 alkyl group, a C2 to C6 alkenyl group, a C2 to C6 alkynyl group, a C1 to C6 alkoxy group, a vinyl group, a hydroxy group, a primary to tertiary amine group, an imine group, a thiol group, a sulfide group, etc.

The "alkyl group" is an aliphatic saturated hydrocarbon group and may be linear or branched.

The term "aryl group" may indicate a substituent including an aromatic ring that may have a single ring structure or a multiple ring structure. Examples of the aryl group includes a phenyl group.

In Chemical Formula 1, n, m and k may be each independently 0, 1 or 2, and may be the same or different from each other.

The phosphorus-based flame retardant may include at least one selected from the group consisting of triphenyl phosphate, trixylenyl phosphate, tricresyl phosphate, triisopropylphenyl phosphate, trischloroethyl phosphate, trischloropropyl phosphate, resorcinol diphenyl phosphate, phenyl diresorcinyl phosphate, cresyl diphenyl phosphate, xylenyl diphenyl phosphate and phenyl di(isopropylphenyl)phosphate.

In some embodiments, the phosphorus-based flame retardant may include at least one selected from the group consisting of triphenyl phosphate, trixylenyl phosphate, tricresyl phosphate, cresyl diphenyl phosphate and xylenyl diphenyl phosphate.

According to embodiments, the shell may include a polymer, and the polymer may include a urea-derived repeating unit, a formaldehyde-derived repeating unit, and a resorcinol-derived repeating unit.

According to some embodiments, the shell may include a urea-formaldehyde-resorcinol terpolymer.

Urea, formaldehyde and resorcinol may be represented by Chemical Formulae 2 to 4, respectively.

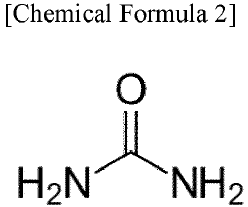

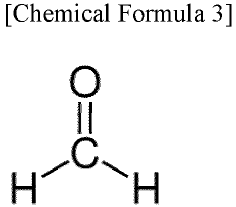

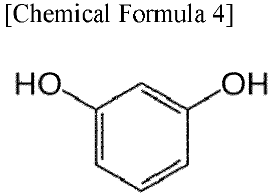

An amine group of the urea, a carbonyl group of formaldehyde and a hydroxy group of resorcinol may be bonded through a reaction to form a repeating unit of the polymer. For example, the amine group of the urea and the hydroxy group of the resorcinol may react to form an amide group, and the carbonyl group of formaldehyde may combine with two nitrogen groups of the urea to form a carbamide group (-NH-C(=O)-NH-).

In some embodiments, in an aromatic ring of resorcinol, a direct bond may be formed at carbon to which the hydroxyl group is not bonded.

In example embodiments, the polymer may have a structure in which linear chains including a plurality of the urea-derived repeating units and the resorcinol repeating units are cross-linked by the formaldehyde-derived repeating unit. Urea and resorcinol may be mixed and polymerized in advance to form a polymer chain, and the formaldehyde may be added to form an interchain cross-linked bond to form the cross-linked structure. For example, formaldehyde may form a cross-linked bond by combining nitrogen atoms of the urea-derived repeating unit included in a plurality of the linear chains.

In some embodiments, the linear chains may be connected to the formaldehyde-derived repeating units in a length direction.

In example embodiments, a content of the formaldehyde-derived repeating unit in the polymer may be in a range from 20 moles to 100 moles with respect to 1 mole of the resorcinol-derived repeating unit.

In some embodiments, the content of the formaldehyde-derived repeating unit in the polymer may be in a range from 90 moles to 100 moles with respect to 1 mole of the resorcinol-derived repeating unit.

In example embodiments, a content of the urea-derived repeating unit in the polymer may be in a range from 10 moles to 40 moles with respect to 1 mole of the resorcinol-derived repeating unit.

In some embodiments, the content of the urea-derived repeating unit in the polymer may be in a range from 15 moles to 25 moles with respect to 1 mole of the resorcinol-derived repeating unit.

In the above-content ranges of the repeating units derived from formaldehyde and urea in the polymer, the polymer having a structure in which a linear chain including a copolymer of urea and resorcinol is crosslinked or connected in the length direction with the formaldehyde-derived repeating unit may be formed. The polymer having the above-described structure may have enhanced thermal stability, thereby improving high-temperature stability of the electrolyte solution.

In example embodiments, a particle diameter of the microcapsule particle may be in a range from 1 µm to 15 µm. In some embodiments, the particle diameter of the microcapsule particle may be in a range from 3 to 13 µm. The expression "particle diameter" refers to the diameter of individually measured microcapsule particle. For example, the size of individual microcapsule particles may be measured and determined by SEM-EDS analysis. Preferably, the particle diameter may be measured from a cross-section SEM image of the particles. The cross-section SEM image may be obtained by using Apreo of Thermofisher^{™} and under about 5 kV of accelerating voltage and 12 mm or less of working distance. The EDS analysis may be conducted by using FlatQuad of Bruker^{™}.

According to exemplary embodiments, a maximum particle diameter of the microcapsule particle may be 10 µm to 15 µm, and a minimum particle diameter may be 0.5 µm to 7 µm.

In example embodiments, an average particle diameter of the microcapsule particles may be in a range from 1 µm to 10 µm. In some embodiments, the average particle diameter of the microcapsule particles may be in a range from 3 µm to 9 µm. The expression "average particle diameter" refers to the average diameter of more than one microcapsule particle, typically a population of microcapsule particles, such as a set of microcapsule particles resulting from a production batch. The average particle diameter may be determined by, e.g., a light scattering or laser (LASER) diffraction method or an electroacoustic spectroscopy. Preferably, the particle diameter may be measured from a cross-section SEM image of the particles. The cross-section SEM image may be obtained by using Apreo of Thermofisher^{™} and under about 5 kV of accelerating voltage and 12 mm or less of working distance.

In the above particle diameter ranges of the microcapsule particles, when the internal temperature of the battery is rapidly increased due to a large surface area, the shell may be ruptured to emit the internal flame retardant in an amount sufficient to prevent a combustion.

In some embodiments, a thickness of the shell may be in a range from 100 nm to 300 nm. In some embodiments, the thickness of the shell may be in a range from 150 nm to 250 nm. In the above thickness range of the shell, the core including the flame retardant may be physically separated from the electrolyte solution and rapidly ruptured at a critical temperature to release the flame retardant.

In some embodiments, a content of the core may be in a range from 50 weight percent (wt%) to 80 wt% based on a total weight of the microcapsule particle. In some embodiments, the content of the core may be 60 wt% to 70 wt% based on the total weight of the microcapsule particle.

In the above content range of the core in the microcapsule particle, a sufficient amount of flame retardant emitted by decomposing the polymer shell may be obtained when an internal temperature of the battery is increased due to a heat generation or external factors due to charging and discharging of the battery.

Hereinafter, an electrolyte additive for a secondary battery and its method of preparation according to embodiments of the present disclosure is described in more detail. The features characterize the additive of the invention as well as its method of preparation according to the invention. The invention also refers to the additive obtained by the method of the invention described herein.

In example embodiments, a mixture including urea and resorcinol may be prepared. The mixture may be prepared by adding urea and resorcinol to a solvent.

The solvent may not be particularly limited, and may include an aqueous solvent. For example, the solvent may include water.

The mixture may include 10 moles to 40 moles of urea based on 1 mole of resorcinol. In some embodiments, the mixture may include 15 moles to 25 moles of urea based on 1 mole of resorcinol.

A total weight of urea and resorcinol in the mixture may be 1 part by weight to 5 parts by weight based on 100 parts by weight of the solvent.

In example embodiments, a pH of the mixture may be in a range from 3 to 5. In the pH range, the polymerization reaction of urea and resorcinol may be facilitated.

In example embodiments, the mixture may further include at least one additive selected from the group consisting of an acidity regulator, a surfactant and a stabilizer.

The mixture may include the acidity regulator. The acidity regulator may be added to lower the pH so that the polymerization reaction of urea and resorcinol may be induced in an acidic atmosphere. The acidity regulator may include a compound that may be dissolved in a solvent to dissociate an acidic salt. For example, the acidity regulator may be a basic compound, and may include a metal hydroxide such as sodium hydroxide and potassium hydroxide, an amine-based compound such as triethanolamine, etc. These may be used alone or in a combination of two or more therefrom.

The acidity regulator may be added in an appropriate amount so that the pH of the mixture may be in the range of 3 to 5.

The mixture may include the surfactant. A robust polymer shell may be stably formed on a surface of the flame retardant core. The surfactant may include, e.g., an ethylene-maleic anhydride polymer.

The mixture may include the stabilizer. the mixture may be further stabilized by the stabilizer in the polymerization of the urea-formaldehyde-resorcinol copolymer. Further, the stabilizer may improve mechanical strength, and physical and chemical stability of the shell of the microcapsule. The stabilizer may include, e.g., ammonium chloride, sodium chloride, etc.

The mixture may include the surfactant in an amount of 0.1 parts by weight to 10 parts by weight based on 100 parts by weight of the solvent.

The mixture may be pre-heated for dissolution of the added components and polymerization of urea and resorcinol. A temperature may be increased to about 40°C to about 70°C by the pre-heating.

A phosphorus-based flame retardant may be added to the mixture to prepare a dispersion. The phosphorus-based flame retardant may be added in a solid form of particles, or may be added in a liquid form.

If the phosphorus-based flame retardant is added to the mixture in the liquid form, the phosphorus-based flame retardant may be dispersed in the form of a colloid. For example, the phosphorus-based flame retardant agglomerated in the form of the colloid may be present in the dispersion.

In example embodiments, the phosphorus-based flame retardant may be added to the mixture in an amount of 1 ml to 15 ml based on 100 ml of the solvent of the mixture. Alternatively, the phosphorus-based flame retardant may be added to the mixture in an amount of 1 parts by weight to 15 parts by weight based on 100 parts by weight of the solvent of the mixture.

If the phosphorus-based flame retardant is added to the mixture in the above content range, the phosphorus-based flame retardant may be uniformly dispersed in the colloidal form and a particle-shaped microcapsule may be formed.

The dispersion may be prepared by adding the phosphorus-based flame retardant to the mixture and then homogenizing at a stirring rate of 10,000 rpm to 15,000 rpm. When homogenizing at the stirring rate in the above range, the phosphorus-based flame retardant may form a colloid having a more uniform size. The dispersion may be prepared in the form of an emulsion by the homogenization.

The homogenization may be performed for 1 minute to 10 minutes.

The dispersion may include a preliminary particle having a micelle structure that may include a core including the phosphorus-based flame retardant and a preliminary shell including a urea-resorcinol product formed on the core.

The preliminary particle may exist in the dispersion as a colloidal state.

Formaldehyde may be added to the dispersion to form microcapsule particles. The dispersion may include the phosphorus-based flame retardant dispersed in the colloidal form and a polymer chain formed by the polymerization of urea and resorcinol. Further, the dispersion may include the preliminary particles including the phosphorus-based flame retardant core and the preliminary shell including the urea-resorcinol product.

Formaldehyde may be added to the dispersion, so that microcapsule particles may be formed by the formation of a shell containing a urea-resorcinol-formaldehyde polymer on the surface of the aggregated phosphorus flame retardant.

In the formation of the microcapsule particles, the preliminary shell may be additionally cross-linked with formaldehyde to be converted into the shell. The preliminary shell may be formed by a weak bond of the urea-resorcinol product. Formaldehyde may be added to the dispersion to further cross-link the preliminary shell to form the shell.

In example embodiments, the formation of the microcapsule particles may be performed at a temperature of 50°C to 80°C. The formation of the microcapsule particles may be performed without ramping after adding formaldehyde to the dispersion. In some embodiments, formaldehyde may be added to the dispersion, and then ramping may be performed to the temperature within the range to form the microcapsule particles.

In some embodiments, formaldehyde may be added to the dispersion, and then stirred for 1 hour to 4 hours to form the microcapsule particles.

The dispersion in which the microcapsule particles are formed may be cooled and filtered to obtain the microcapsule particles. In some embodiments, after the filtration, the microcapsule particles may be obtained by a plurality of washings with a solvent, e.g., distilled water.

The electrolyte solution for a lithium secondary battery (hereinafter, abbreviated as an electrolyte solution) according to example embodiments may include the electrolyte additive for a secondary battery above. The electrolyte solution may further include an organic solvent and a lithium salt.

In example embodiments, a content of the electrolyte additive may be in a range from 1 wt% to 5 wt% based on a total weight of the electrolyte solution. In some embodiments, the content of the electrolyte additive may be in a range from 2 wt% to 4 wt% based on the total weight of the electrolyte solution.

In the above content range, a secondary battery such as a lithium secondary battery having improved high-temperature stability of the electrolyte and improved high-temperature storage and life-span properties may be efficiently implemented.

In an embodiment, the organic solvent may be used in a residual amount or a remainder excluding the lithium salt, the additive, an auxiliary additive, etc. A content of the organic solvent may be 90 parts by weight to 96 parts by weight based on the total weight of the electrolyte solution.

The organic solvent may include an organic compound that may provide sufficient solubility for the lithium salt, the triphenyl phosphate-based additive, the auxiliary additive, etc. while having no reactivity with the lithium secondary battery. In some embodiments, a non-aqueous organic solvent may be used, and the electrolyte solution may be provided as a non-aqueous electrolyte solution.

In example embodiments, the organic solvent may include a carbonate-based solvent, an ester-based solvent, an ether-based solvent, an alcohol-based solvent, an aprotic solvent, etc. These may be used alone or in a combination of two or more therefrom.

Examples of the carbonate-based solvent include dimethyl carbonate (DMC), ethyl methyl carbonate (EMC), methyl propyl carbonate, ethyl propyl carbonate, diethyl carbonate (DEC), dipropyl carbonate, propylene carbonate (PC), ethylene carbonate (EC), fluoroethylene carbonate (FEC), butylene carbonate etc.

Examples of the ester-based solvent include methyl acetate (MA), ethyl acetate (EA), n-propyl acetate (n-PA), 1,1-dimethylethyl acetate (DMEA), methyl propionate (MP), ethyl propionate (EP), gamma-butyrolacton (GBL), decanolide, valerolactone, mevalonolactone, caprolactone, etc.

Examples of the ether-based organic solvent include dibutyl ether, tetraethylene glycol dimethyl ether (TEGDME), diethylene glycol dimethyl ether (DEGDME), dimethoxy ethane, 2-methyltetrahydrofuran, tetrahydrofuran, etc.

The aprotic solvent may include a nitrile-based solvent, an amide-based solvent such as dimethyl formamide (DMF), a dioxolane-based solvent such as 1,3-dioxolane, a sulfolane-based solvent, etc.

In an embodiment, the carbonate-based solvent may be used as the organic solvent. For example, the organic solvent may include ethylene carbonate (EC), ethyl methyl carbonate (EMC), dimethyl carbonate (DMC), diethyl carbonate (DEC), or a combination thereof.

In an embodiment, a combination of at least two of ethylene carbonate (EC), ethyl methyl carbonate (EMC), dimethyl carbonate (DMC) and diethyl carbonate (DEC) may be used as the organic solvent.

In some embodiments, the organic solvent may not include a ketone-based solvent. If the organic solvent contains a ketone-based solvent, the microcapsule particles may be damaged and the flame retardant may be dissolved in the electrolyte solution even at a temperature below a critical temperature. In this case, stability of the electrolyte solution may be lowered and battery performance may be degraded.

The lithium salt may be included in an amount in a range from 0.01 wt% to 5 wt% based on a total weight of the electrolyte solution, e.g., from 0.1 wt% to 2 wt%. In some embodiments, a content of the lithium salt in the electrolyte solution may be in a range from 0.01 M to 5 M. Within the above range, transfer of lithium ions and/or electrons may be promoted during charging and discharging of the lithium secondary battery, and improved capacity may be provided.

The lithium salt may be expressed as Li⁺X⁻, and non-limiting examples of anions (X-) of the lithium salt include F⁻, Cl⁻, Br⁻, I⁻, NO₃⁻, N(CN)₂⁻, BF₄⁻, ClO₄⁻, PF₆⁻, (CF₃)₂PF₄-, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N; CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc. These may be used alone or in a combination of two or more therefrom.

In example embodiments, the electrolyte solution may further include an auxiliary additive. The auxiliary additive may be included in an amount of 0.01 wt% to 5 wt% based on the total weight of the electrolyte solution, e.g., from 0.1 wt% to 4 wt%.

For example, the auxiliary additive may include an unsaturated cyclic carbonate-based compound, a fluorine-substituted cyclic carbonate-based compound, a sultone-based compound, a cyclic sulfate-based compound, an oxalatophosphate-based compound, etc.

The unsaturated cyclic carbonate-based compound may include vinyl ethylene carbonate (VEC). Additionally, the unsaturated cyclic carbonate-based compound may include vinylene carbonate (VC).

The fluorine-substituted cyclic carbonate-based compound may include fluoroethylene carbonate (FEC).

The sultone-based compounds include 1,3-propane sultone, 1,3-propene sultone, 1,4-butane sultone, etc.

The cyclic sulfate-based compound may include 1,2-ethylene sulfate, 1,2-propylene sulfate, etc.

The oxalatophosphate-based compound may include lithium difluoro bis(oxalato)phosphate.

In an embodiment, the auxiliary additive may include the fluorine-substituted cyclic carbonate-based compound, the sultone-based compound, the cyclic sulfate-based compound and the oxalatophosphate-based compound.

Durability and stability of the electrode may be further improved by the auxiliary additive. The auxiliary additive may be included in an appropriate amount within a range that does not inhibit the transfer of lithium ions in the electrolyte solution.

Embodiments of the present disclosure provide a lithium secondary battery containing the above-described electrolyte solution.

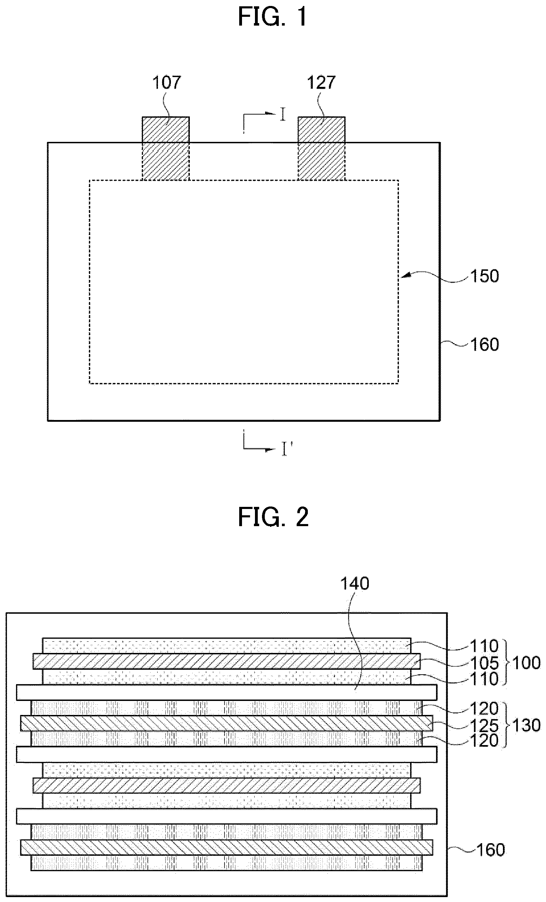

FIGS. 1 and 2 are a schematic plan view and a cross-sectional view, respectively, illustrating a lithium secondary battery in accordance with example embodiments. For example, FIG. 2 is a cross-sectional view taken along a line I-I' of FIG. 1.

Referring to FIGS. 1 and 2, the lithium secondary battery may include an electrode assembly including a cathode 100, an anode 130 and a separator 140 interposed between the cathode and the anode.

The electrode assembly may be accommodated with the above-described electrolyte solution in a case 160 to be impregnated with the electrolyte solution.

The cathode 100 may include a cathode active material layer 110 formed by coating a cathode active material on the cathode current collector 105. The cathode active material may include a compound capable of reversibly intercalating and de-intercalating lithium ions.

In example embodiments, the cathode active material may include a lithium-transition metal oxide. For example, the lithium-transition metal oxide may include nickel (Ni), and may further include at least one of cobalt (Co) or manganese (Mn).

For example, the lithium-transition metal oxide may be represented by Chemical Formula 5 below.

[Chemical Formula 5] Li₁₊ₐNi_{1-(x+y)}CoₓM_{y}O₂

In Chemical Formula 5, -0.05≤a≤0.2, 0.01≤x≤0.3, 0.01≤y≤0.3, and M may include at least one element selected from Mn, Mg, Sr, Ba, B, Al, Si, Ti, Zr and W.

As represented in Chemical Formula 5, the lithium-transition metal compound may contain Ni in a highest content or a highest molar ratio among Ni, Co and M. Ni may substantially serve as a metal related to a power and/or a capacity of the lithium secondary battery. Ni may be employed in the largest amount among transition metals, so that a high-capacity and high-power lithium secondary battery may be implemented.

In an embodiment, in Chemical Formula 5, 0.01≤x≤0.2 and 0.01≤y≤0.2. In an embodiment, the molar ratio of Ni may be 0.7 or more, or 0.8 or more.

If the Ni content in the cathode active material or the lithium-transition metal oxide increases, chemical stability, e.g., high-temperature storage stability of the secondary battery may be relatively deteriorated. Further, sufficient high power/high capacity properties from the high Ni content may not be provided due to surface damages of the cathode active material or side reactions with the electrolyte solution during repeated charging/discharging.

A slurry may be prepared by mixing and stirring the cathode active material with a binder, a conductive material and/or a dispersant in a solvent. The slurry may be coated on the cathode current collector 105, and then dried and pressed to prepare the cathode 100.

The cathode current collector 105 may include, e.g., stainless steel, nickel, aluminum, titanium, copper, or an alloy thereof, and may include, e.g., aluminum or an aluminum alloy.

The binder may include, e.g., an organic binder such as a vinylidene fluoride-hexafluoropropylene copolymer (PVDF-co-HFP), polyvinylidene fluoride (PVDF), polyacrylonitrile, polymethylmethacrylate, etc., or an aqueous binder such as styrene-butadiene rubber (SBR), and may be used with a thickener such as carboxymethyl cellulose (CMC).

For example, a PVDF-based binder may be used as the cathode binder. In this case, an amount of the binder for forming the cathode active material layer may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, Super-P, carbon black, graphene, carbon nanotube, etc., and/or a metal-based material such as tin, tin oxide, titanium oxide, a perovskite material such as LaSrCoO₃ or LaSrMnO₃, etc.

The anode 130 may include an anode current collector 125 and an anode active material layer 120 formed by coating an anode active material on the anode current collector 125.

The anode active material may include a material widely known in the related art which may be capable of intercalating and de-intercalating lithium ions without a particular limitation. For example, a carbon-based material such as a crystalline carbon, an amorphous carbon, a carbon composite, a carbon fiber, etc.; a lithium alloy; a silicon (Si)-based compounds or tin may be used.

Examples of the amorphous carbon may include hard carbon, coke, mesocarbon microbead (MCMB), mesophase pitch-based carbon fiber (MPCF), etc.

Examples of the crystalline carbon may include a graphite-based carbon such as natural graphite, artificial graphite, graphitized coke, graphitized MCMB, graphitized MPCF, etc. Elements included in the lithium alloy may include aluminum, zinc, bismuth, cadmium, antimony, silicon, lead, tin, gallium, indium, etc.

The silicon-based compound may include, e.g., silicon, a silicon oxide or a silicon-carbon composite compound such as silicon carbide (SiC).

For example, an anode slurry may be prepared by mixing and stirring the anode active material with the above-described binder, the conductive material, the thickener, etc., in a solvent. The anode slurry may be coated on at least one surface of the anode current collector 125, and then dried and pressed and dried to form the anode 130.

The separator 140 may be interposed between the cathode 100 and the anode 130. The separator 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separator 140 may also include a non-woven fabric formed from a glass fiber with a high melting point, a polyethylene terephthalate fiber, etc.

In some embodiments, an area (e.g., a contact area with the separator 140) and/or a volume of the anode 130 may be larger than that of the cathode 100. Accordingly, transfer of the lithium ions generated from the cathode 100 may be promoted to the anode 130 without a precipitation.

In example embodiments, an electrode cell may be defined by the cathode 100, the anode 130 and the separator 140, and a plurality of the electrode cells may be stacked to form the electrode assembly 150 that may have e.g., a jelly roll shape. For example, the electrode assembly 150 may be formed by winding, stacking or folding of the separator 140.

The electrode assembly 150 may be accommodated together with the electrolyte solution according to the above-described embodiments of the present disclosure in the case 160 to define the lithium secondary battery.

As illustrated in FIG. 1, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be fabricated into a cylindrical shape using a can, a prismatic shape, a pouch shape, a coin shape, etc.

Hereinafter, exemplary experimental examples are proposed to more concretely describe the present disclosure. However, the following examples are only given for illustrating the present invention and those skilled in the related art will obviously understand that various alterations and modifications are possible within the scope and spirit of the present invention. Such alterations and modifications are duly included in the appended claims.

### Example 1

### Preparation of microcapsules

100 g of water, 2.5 g of urea (0.0416 mol), 0.25 g of resorcinol (0.00227 mol), 0.25 g of ammonium chloride, 50 ml of an ethylene-maleic anhydride polymer solution (2.5 wt% of solid content) was added to a round-bottom flask, and heated to 50°C. Thereafter, a pH of the mixture was adjusted to 3.5 by adding triethanolamine. Thereafter, 5.5 ml of triphenyl phosphate (TPP) was added to the mixture and emulsified by homogenizing at a stirring rate of 13,000 rpm for 5 minutes to prepare a dispersion.

6.3 g (0.210 mol) of formaldehyde was added to the dispersion, and then heated to 55°C and stirred for 2 hours to complete the reaction. After the reaction, the dispersion was cooled, filtered, and then repeatedly washed with distilled water to obtain microcapsules.

### Preparation of electrolyte solution

A 1.0 M LiPF₆ solution (EC/EMC mixed solvent having a volume ratio of 25:75) was prepared. In the LiPF₆ solution, 1 wt% of fluoroethylene carbonate (FEC), 0.5 wt% of 1,3-propane sultone (PS), 1 wt% of 1,3-propene sultone (PRS), 0.5 wt% of ethylene sulfate (ESA) and 1.0 wt% of lithium difluorobis(oxalato) phosphate (W3) were added thereto, and 2.5 wt% of the microcapsules prepared in Example 1 was added thereto.

### Fabrication of lithium secondary battery sample

A cathode active material in which Li[Ni_{0.6}Co_{0.2}Mn_{0.2}]O₂ and Li[Ni_{0.8}Co_{0.1}Mn_{0.1}]O₂ were mixed in a weight ratio of 6:4, carbon black as a conductive material and polyvinylidene fluoride (PVdF) as a binder were mixed in a weight ratio of 92:5:3. The slurry was uniformly coated on an aluminum foil having a thickness of 15 µm, and vacuum dried and pressed at 130°C to prepare a cathode for a lithium secondary battery.

95 wt% of an anode active material in which artificial graphite and natural graphite were mixed in a weight ratio of 7:3, 1 wt% of Super-P as a conductive material, 2 wt% of styrene-butadiene rubber (SBR) as a binder, and 2 wt% of carboxymethyl cellulose (CMC) as a thickener were mixed to prepare an anode slurry. The anode slurry was uniformly coated on a copper foil having a thickness of 15 µm, and them dried and pressed to prepare an anode.

The anode slurry was uniformly coated on a region of a copper foil (15 µm thick) having a protrusion (an anode tab) on one side thereof except for the protrusion, dried, and roll pressed to prepare an anode.

The cathode and the anode manufactured as described above were cut into predetermined sizes and stacked, and a separator (polyethylene, thickness: 20 µm) was interposed between the cathode and the anode to form an electrode assembly, and then tab portions of the cathode and the anode were welded.

The electrode assembly was placed in a pouch, and three sides were sealed except for an electrolyte injection side. Regions where the tab portions are located were included in the sealing portion. The above-prepared electrolyte solution was injected through the electrolyte injection side, and the electrolyte injection side was also sealed. Thereafter, impregnation was performed for 12 hours or more to prepare a 2Ah lithium secondary battery sample.

### Comparative Example 1

An electrolyte solution and a lithium secondary battery sample were prepared by the same method as that in Example 1, except that 5 wt% of triphenylphosphate was added instead of 2.5 wt% of the microcapsule.

### Comparative Example 2

An electrolyte solution and a lithium secondary battery sample were prepared by the same method as that in Example 1, except that the microcapsule was not introduced.

### Experimental Example 1: SEM-EDS Analysis of microcapsule

A scanning electron microscope (SEM) image of the microcapsule manufactured in Example 1 was obtained, and a cross-sectional element distribution of the microcapsule manufactured in Example 1 was analyzed by an energy dispersive spectroscopy (EDS).

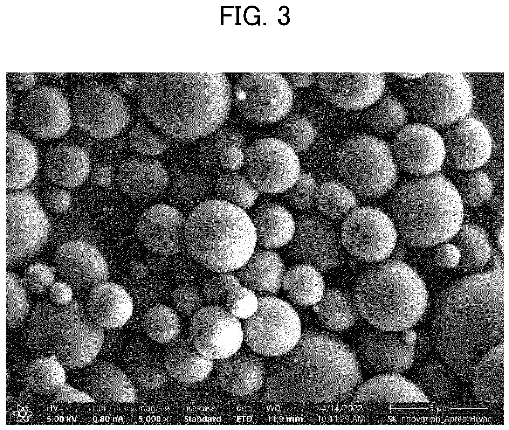

FIG. 3 is an SEM image of a microcapsule prepared in Example 1.

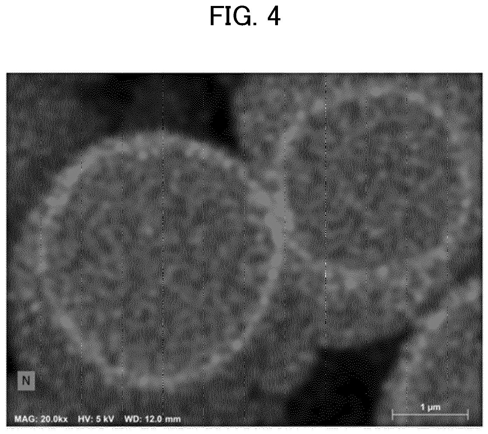

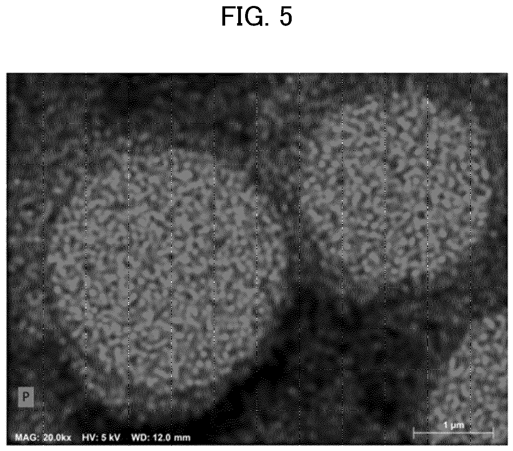

FIGS. 4 and 5 are EDS element mapping images nitrogen (N) and phosphorus (P) of a cross-section of a microcapsule in Example 1.

As shown in to FIG. 3, spherical microcapsules were formed, and a particle diameter was in a range from about 5.302 µm to 11.30 µm.

Referring to FIGS. 4 and 5, it is confirmed that individual microcapsule particle of Example 1 contained phosphorus and nitrogen. Particularly, the microcapsule particle of Example 1 contained nitrogen in a relatively high content at a surface portion (shell of the microcapsule particle) and phosphorus in a relatively high content at a central portion (core of the microcapsule particle).

Accordingly, it is confirmed that the central portion of the particle included triphenyl phosphate, and a coating layer of the particle included a urea-resorcinol-formaldehyde polymer. In FIG. 4, it appears that nitrogen was included in the central portion of the microcapsule particle, but this indicates a signal from a shell behind the capsule cross section. In FIG. 5, it appears that a small amount of phosphorus was also included in the coating layer of the microcapsule particle, but this indicates a signal from unreacted triphenyl phosphate partially remaining at an outside of the coating layer.

### Experimental Example 2: Evaluation on battery properties

### (1) Heat exposure measurement (hot box test)

The secondary batteries of Examples and Comparative Examples of 100% SOC were put in an oven, heated from 25°C by 5°C/min (a 30-minute test at ramping) to reach 150°C, and then left at a temperature of 150°C to measure a time (delay time) taken until a battery cell exploded.

### (2) Evaluation on initial properties

### 2-1) Initial capacity evaluation

The secondary batteries of Examples and Comparative Examples were charged with 0.5C-rate CC/CV (4.2V, 0.05C cut-off) at 25°C, and then 0.5C-rate CC discharged (2.7V cut-off) to measure a discharge capacity.

### 2-2) Evaluation on internal resistance (DCIR)

The C-rate was increased to 0.2C, 0.5C, 1.0C, 1.5C, 2.0C, 2.5C, and 3.0C at an SOC 60% point, and end points of a voltage was configured as a straight line equation when the charging and discharging of the corresponding C-rate were performed for 10 seconds, and a slope was adopted as a DCIR.

### (3) Evaluation on high temperature life-span property

### 3-1) Evaluation on capacity retention rate (Ret) after repeated high-temperature charging and discharging

The secondary batteries of Examples and Comparative Examples were charged with 1C-rate CC/CV at 45°C and discharged with 1C-rate CC as one cycle for 600 cycles. Thereafter, a discharge capacity was measured.

A capacity retention was calculated as a percentage of the discharge capacity after the 600 cycles relative to the initial capacity measured at the above 2-1).

### 3-2) Evaluation on internal resistance (DCIR) after repeated high-temperature charging and discharging

Internal resistances of the secondary batteries of Examples and Comparative Examples after the repeated high-temperature charge and discharge were measured by the same method as that in the above 2-2).

### (4) Evaluation on high temperature storage property

### 4-1) Evaluation on capacity retention (Ret) after high temperature storage

The secondary batteries of Examples and Comparative Examples at a 100% SOC state were stored at a temperature of 60°C for 10 weeks.

The secondary batteries of Examples and Comparative Examples stored at the high temperature as described above were discharged by 0.5C-rate CC (2.7 V cut-off), and then a discharge capacity was measured.

A capacity retention was calculated as a percentage of the discharge capacity after the high-temperature storage relative to the initial capacity measured in the above 3-1).

### 4-2) Evaluation on internal resistance (DCIR) change ratio after high temperature storage

Internal resistances of the secondary batteries of Examples and Comparative Examples after the high-temperature storage were measured by the same method as that in 2-2).

A change ratio of the measured internal resistance after the high temperature storage relative to the initial internal resistance measured in the above 2-2) was calculated as a percentage.

The evaluation results of Experimental Example 2 are shown in Table 1 below.

**[Table 1]**

| | | Example 1 | Comparative Example 1 | Comparative Example 2 |
|---|---|---|---|---|
| heat exposure | explosion temperature (°C) | 150°C | 150°C | <150°C |
| | delay time (min) | 1 | 2.2 | - |
| initial property | capacity, mAh | 1759.4 | 1734.5 | 1753.9 |
| | DCIR, mΩ | 37.5 | 39 | 35.4 |
| high temperature life-span | capacity retention (%) | 79 | 82 | 78 |
| | DCIR, mΩ | 31.2 | 33.4 | 31.8 |
| high temperature storage | capacity retention (%) | 91 | 90 | 90 |
| | DCIR change ratio (%) | 7% | 11% | 11% |

Referring to Table 1 above, the battery of Example 1 was stable at high temperature during the heat exposure, and performance degradation of the cell was suppressed at high temperature. Specifically, the battery of Example 1 was not exploded for 1 minute even at 150°C in the heat exposure evaluation. Additionally, even when being stored at high temperature for a long period, the change ratio of the internal resistance was lowered, and the internal resistance was significantly reduced during the repeated charging and discharging at high temperature.

Particularly, the battery of Example 1 had a lower resistance after the repeated charging and discharging at high temperature than that from the battery of Comparative Example 1 using the electrolyte solution including triphenyl phosphate that was not embedded in the microcapsule, thereby improving high-temperature life-span properties.

When evaluating the thermal exposure of the battery of Comparative Example 1, the stability similar to that of Example was provided, but the internal resistance properties of the cell were degraded when being stored at high temperature for a long period.

The battery of Comparative Example 2 did not contain the flame retardant, and the high-temperature stability was explicitly deteriorated compared to that of the battery of Comparative Example 1. Particularly, in the heat exposure evaluation, the battery of Comparative Example 2 was exploded before reaching 150°C by ramping.

The above-provided Examples are merely examples of applying the concepts of the present disclosure, and other elements may be further included without departing from the scope of the present disclosure.

## Claims

1. An additive for an electrolyte solution of a secondary battery comprising a microcapsule particle, wherein the microcapsule particle comprises:
a core containing a phosphorus-based flame retardant; and
a shell surrounding a surface of the core and comprising a polymer that includes a urea-derived repeating unit, a formaldehyde-derived repeating unit and a resorcinol-derived repeating unit.

2. The additive for an electrolyte solution of a secondary battery according to claim 1, wherein the shell includes a urea-formaldehyde-resorcinol terpolymer.

3. The additive for an electrolyte solution of a secondary battery according to claim 1 or 2, wherein the phosphorus-based flame retardant includes a phosphate-based flame retardant or a phosphazene-based flame retardant.

4. The additive for an electrolyte solution of a secondary battery according to claim 3,
wherein the phosphazene-based flame retardant includes a compound represented by Chemical Formula 1: 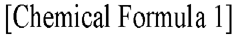 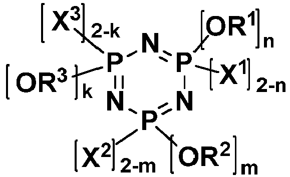
wherein, in Chemical Formula 1, X¹ to X³ are each independently Cl, Br or F, and, R¹ to R³ are each independently a C1 to C6 alkyl group or a C6 to C20 aryl group, and n, m and k are each independently 0, 1 or 2;
or
wherein the phosphate-based flame retardant includes at least one selected from the group consisting of triphenyl phosphate, trixylenyl phosphate, tricresyl phosphate, triisopropylphenyl phosphate, trischloroethyl phosphate, trischloropropyl phosphate, resorcinyl diphenyl phosphate, phenyl diresorcinyl phosphate, cresyl diphenyl phosphate, xylenyl diphenyl phosphate and phenyl di(isopropylphenyl)phosphate.

5. The additive for an electrolyte solution of a secondary battery according to one of claims 1 to 4, wherein a content of the formaldehyde-derived repeating unit in the polymer is in a range from 20 mols to 100 moles per 1 mole of the resorcinol-derived repeating unit, and a content of the urea-derived repeating unit in the polymer is in a range from 10 moles to 40 moles per 1 mole of the resorcinol-derived repeating unit.

6. The additive for an electrolyte solution of a secondary battery according to one of claims 1 to 5, wherein a particle diameter of the microcapsule particle is in a range from 1 µm to 15 µm or an average particle diameter of the microcapsule particles is in a range from 1 µm to 10 µm; and/or the shell has a thickness in a range from 100 nm to 300 nm.

7. The additive for an electrolyte solution of a secondary battery according to one of claims 1 to 6, wherein a content of the core is in a range from 50 wt% to 80 wt% based on a total weight of the microcapsule particle.

8. The additive for an electrolyte solution of a secondary battery according to one of claims 1 to 7, wherein the polymer has a structure in which linear chains including a plurality of the urea-derived repeating units and the resorcinol-derived repeating units are cross-linked by the formaldehyde-derived repeating unit.

9. A method of preparing an additive for an electrolyte solution of a secondary battery, comprising:
adding a phosphorus-based flame retardant to a mixture containing urea and resorcinol to prepare a dispersion; and
adding formaldehyde to the dispersion to form microcapsule particles, and forming the additive by including the microcapsule particles.

10. The method of claim 9, wherein a pH of the mixture is in a range from 3 to 5.

11. The method of claims 9 or 10, wherein preparing the dispersion comprises forming preliminary particles that comprise a core containing the phosphorus-based flame retardant and a preliminary shell containing a urea-resorcinol product formed on the core, and forming the microcapsule particles comprises converting the preliminary shell into a shell by additionally cross-linking the preliminary shell by formaldehyde; optionally wherein forming the microcapsule particles is performed at a temperature in a range from 50 °C to 80 °C.

12. An electrolyte solution for a secondary battery, comprising:
an organic solvent;
a lithium salt; and
the additive for an electrolyte solution of a secondary battery as defined in any one of claims 1 to 8.

13. The electrolyte solution for a secondary battery according to claim 12, wherein a content of the additive for an electrolyte solution of a secondary battery is in a range from 1 wt% to 5 wt% based on a total weight of the electrolyte solution.

14. A secondary battery, comprising the additive as defined in one of claims 1 to 8, or the electrolyte solution as defined in claim 12 or 13.

15. Use of an additive as defined in one of claims 1 to 8 for an electrolyte solution of a secondary battery.
